# EUROPÄISCHE PATENTSCHRIFT

(11) **EP 2 981 793 B1**
(45) Veröffentlichungstag und Bekanntmachung des Hinweises auf die Patenterteilung: **05.04.2017**
(21) Anmeldenummer: 14703036.5
(22) Anmeldetag: 20.01.2014
(51) Int. Cl.: G01D 18/00

(54) **MESSUMFORMER ZUR PROZESSINSTRUMENTIERUNG UND VERFAHREN ZUR ÜBERWACHUNG DES ZUSTANDS DESSEN SENSORS**
MEASUREMENT TRANSDUCER FOR INSTRUMENTING A PROCESS AND METHOD FOR MONITORING ITS SENSORS STATUS
CONVERTISSEUR DE MESURE POUR INSTRUMENTER UN PROCÉDÉ ET METHODE DE SURVEILLANCE DE L'ÉTAT DE SES CAPTEURS

(30) Priorität: 03.04.2013 DE 102013205864
(43) Veröffentlichungstag der Anmeldung: 10.02.2016
(73) Patentinhaber: Siemens Aktiengesellschaft, 80333 München (DE)
(72) Erfinder: CHEMISKY, Eric, F-67250 Soultz sous forets (FR); FRIESEN, Slava, 76139 Karlsruhe (DE)
(86) Internationale Anmeldenummer: PCT/EP2014/050982
(87) Internationale Veröffentlichungsnummer: WO 2014/161676

(56) Entgegenhaltungen:
- EP-A2- 1 248 175
- EP-B1- 2 269 009
- FR-A1- 2 757 283

## Beschreibung

Die Erfindung betrifft einen Messumformer zur Prozessinstrumentierung mit einem Sensor zur Erfassung einer physikalischen oder chemischen Größe nach dem Oberbegriff des Anspruchs 1 sowie ein Verfahren zur Überwachung des Sensorzustands nach dem Oberbegriff des Anspruchs 6.

In prozesstechnischen Anlagen werden zur Steuerung von Prozessen vielfältige Feldgeräte für die Prozessinstrumentierung eingesetzt. Messumformer beispielsweise dienen zur Erfassung von Prozessvariablen, zum Beispiel Temperatur, Druck, Durchflussmenge, Füllstand, Dichte oder Gaskonzentration eines Mediums. Mit Hilfe eines Sensors, der häufig auf einem planaren Substrat aufgebracht ist, wird die physikalische oder chemische Größe in ein elektrisches Messsignal umgewandelt. Dieses Substrat dient dann als mechanische Befestigung des empfindlichen Sensors auf einem Träger und zudem als Schutz gegen äußere Einflüsse, beispielsweise zur Verbesserung der elektromagnetischen Verträglichkeit. Insbesondere bei piezoresistiven Drucksensoren besteht eine Möglichkeit zum Aufbringen elektrischer Sensorelemente des Sensors auf das Substrat darin, diese Elemente im Substrat einzubetten und das Substrat in der Nähe dieser Elemente zu dotieren, wobei ein elektrischer Kontakt zwischen dem elektrischen Element und dem Substrat besteht. Ein PN-Übergang nach Art einer Diode sorgt bei geeignetem Anlegen einer Spannung für eine elektrische Trennung von Element und Substrat. Elektrische Leitungen, welche Signale von dem Sensor zu externen Kontakten leiten, sind zur Auswertung der Signale an eine Ansteuer- und Auswerteeinrichtung angeschlossen, die beispielsweise über einen Feldbus einen dem jeweiligen Druck entsprechenden Messwert an eine Leitstation oder eine speicherprogrammierbare Steuerung ausgibt.

Aus der EP 2 269 009 B1 ist ein Messumformer zur Prozessinstrumentierung bekannt, bei welchem der Zustand eines Substrats, das elektrische Elemente eines Sensors zur Erzeugung eines Messsignals trägt, auf Veränderungen durch chemische Kontamination überwacht wird. Zusätzlich werden die Sensorelemente und ihre Anschlussleitungen auf Bruch, das heißt auf elektrische Unterbrechung, überwacht.

Die Detektion eines Sensorbruchs kann beispielsweise über eine Messung der Stromaufnahme der zu einer Wheatstone-Brücke verschalteten Messwiderstände, welche allgemein als Sensorelemente bezeichnet werden können, erfolgen. Da die Temperaturempfindlichkeit dieser Widerstände relativ hoch im Vergleich zu ihrer Druckempfindlichkeit ist, wird eine hochgenaue Ermittlung des aufgenommenen Stromes mit zusätzlicher Temperaturkompensation benötigt. Die dafür erforderliche, hochgenaue Messelektronik ist aufgrund der geforderten geringen Bauelementestreuung in nachteiliger Weise mit hohem Aufwand verbunden. Da in immer mehr Anwendungen von Messumformern eine sehr hohe Zuverlässigkeit bei der Messung physikalischer oder chemischer Größen gefordert wird, welche durch entsprechende Zertifizierungen, zum Beispiel nach IEC 61508, zu bestätigen ist, kann jedoch immer seltener auf eine Überwachung des Sensors auf Fehlfunktion oder Bruch verzichtet werden. Dabei kann eine Fehlfunktion eines Sensors unter anderem durch ein Reißen von Signal- und/oder Versorgungsdrähten, die als Leitungen auf dem Substrat oder als Bondingdrähte ausgeführt sein können, oder zum Beispiel bei resistiven Drucksensoren durch einen Bruch des auf dem Substrat eindotierten Materials hervorgerufen werden.

Der Erfindung liegt die Aufgabe zugrunde, einen Messumformer zur Prozessinstrumentierung zu schaffen, bei welchem der Zustand eines Sensors zuverlässig und mit geringem Aufwand auf Reißen oder Bruch des Sensors oder von Zuleitungen überwacht werden kann.

Zur Lösung dieser Aufgabe weist der neue Messumformer der eingangs genannten Art die im kennzeichnenden Teil des Anspruchs 1 angegebenen Merkmale auf. In den abhängigen Ansprüchen sind vorteilhafte Weiterbildungen der Erfindung und in Anspruch 6 ein Überwachungsverfahren beschrieben.

Der Querregler, auch Parallelregler oder Shuntregler genannt, ist parallel zum Sensor geschaltet und nimmt immer so viel Strom auf, wie über den zum Sensor in Reihe geschalteten Widerstand geführt werden muss, damit die am Widerstand abfallende Spannung und damit die Versorgungsspannung des Sensors konstant gehalten wird. Nimmt der Sensor einen höheren Strom auf, sinkt somit der durch den Querregler eingestellte Strom entsprechend. Umgekehrt stellt der Querregler einen höheren Strom ein, wenn über den Sensor beispielsweise aufgrund seiner Temperaturabhängigkeit ein geringerer Strom fließt. Da die Versorgungsspannung des Sensors durch den Querregler konstant gehalten wird, ist diese weitgehend unabhängig von der Temperatur. Das hat den Vorteil, dass sich eine eventuell nicht lineare Abhängigkeit des Messsignals von der Spannungsversorgung des Sensors nicht auf die Messgenauigkeit des Messumformers auswirkt. Die indirekte Messung des durch den Sensor aufgenommenen Stroms und ihre Überwachung zur Detektion eines Fehlverhaltens oder Bruchs hat dabei den Vorteil, dass sie eine vergleichsweise geringe Empfindlichkeit gegenüber einer Bauelemementestreuung in der Auswerteelektronik besitzt.

Die Erfindung hat somit den Vorteil, dass in besonders einfacher Weise und mit geringem Aufwand ein Sensor, der zur Erfassung einer physikalischen oder chemischen Größe in einem Messumformer vorgesehen ist, auf Veränderungen überwacht werden kann, die beispielsweise mit einer Rissbildung im Substrat oder einem Drahtbruch einhergehen. Dabei kann es vorkommen, dass eine Rissbildung des Substrats bereits zu einer detektierbaren Veränderung des durch den Querregler eingestellten, parallel zum Sensor fließenden Stroms führt, während in dem Sensor noch lediglich eine schleichende Veränderung seiner zur Erzeugung des Messsignals genutzten Eigenschaft und damit ein Verschieben des Messwerts, ein so genanntes Driften, bewirkt wird, die sich lediglich als Messwertverfälschung äußert und ohne Verwendung des Querreglers mit Stromauswertung nicht als Fehler erkannt werden könnte. Somit wird auch die Zuverlässigkeit der durch den Messumformer gelieferten Messwerte verbessert. Bei Auftreten eines Fehlers, der beispielsweise als Stromüberhöhung erkannt wird, gibt der Messumformer eine Fehlermeldung aus und ein Prozess, in welchem der Messumformer eingesetzt wird, kann gegebenenfalls in einen sicheren Zustand gebracht werden. Damit wird der Anteil von möglichen Fehlern, die in einen sicheren Zustand führen, die so genannte "Safe Failure Fraction (SFF)" erhöht.

Wie bereits oben erläutert, ist die Summe des durch den Sensor und den dazu parallel geschalteten Querregler aufgenommenen Stroms weitgehend konstant. Somit treten kaum exemplarspezifische Schwankungen des Stromverbrauchs auf und es müssen bei einem modularen Aufbau von Sensoreinheit und Ansteuer- und Auswerteelektronik keine exemplarspezifischen Anpassungen der Schnittstelle an den jeweiligen Stromverbrauch der Sensoreinheit vorgenommen werden. Die Erfindung wirkt sich daher günstig auf die Modularität des Messumformers aus. Das ist insbesondere von Vorteil bei einem Aufbau eines Messumformers, bei welchem eine Sensoreinheit getrennt von einer Ansteuer- und Auswerteeinrichtung angeordnet werden muss. Beispielsweise ist es bei einer Ausführung einer Sensoreinheit für einen Einsatz in explosionsgefährdeten Bereichen der Zone 0 möglich, die Sensoreinheit innerhalb eines Tanks anzuordnen, während sich die zugehörige Ansteuer- und Auswerteeinrichtung, die lediglich für explosionsgefährdete Bereiche der Zone 1 geeignet ist, außerhalb des Tanks befindet.

Eine besonders gute Ansprechempfindlichkeit der Überwachung kann erreicht werden, wenn in der Sensoreinheit die Sensortemperatur ermittelt wird und jeweils zugeordnete Grenzwerte, deren Überschreiten als vorbestimmtes Kriterium zur Detektion von Fehlern überwacht wird, in Form einer Temperaturkennlinie abgelegt sind.

Bei einer besonders vorteilhaften Ausgestaltung der Erfindung wird bei intaktem Sensor und maximaler Stromaufnahme des Sensors nur ein vergleichsweise kleiner, parallel zum Sensor fließender Strom durch den Querregler eingestellt. Wenn ein beispielsweise um eine Größenordnung kleinerer Strom als bei minimaler Stromaufnahme des Sensors eingestellt wird, ist damit in vorteilhafter Weise die Gesamtstromaufnahme durch Ergänzung des Querreglers nur unwesentlich erhöht. Dies wirkt sich günstig auf den Stromverbrauch des Messumformers aus.

Eine besonders einfache Möglichkeit zur Ermittlung des parallel zum Sensor fließenden Stroms ist, diesen über einen Messwiderstand zu leiten, der in den Pfad des zu ermittelnden Stroms eingefügt ist. Der Bereich auftretender Stromwerte kann durch geeignete Bemessung des Widerstandswerts zur Erleichterung der Auswertung auf einen weiten Spannungsbereich abgebildet werden. Das so erzeugte Spannungssignal, dessen Wert dem jeweiligen Wert der Stromstärke entspricht, kann beispielsweise zur Auswertung auf einen Analog-Digital-Umsetzer zur digitalen Weiterverarbeitung geführt werden oder es kann zum Vergleich mit einem vorbestimmten Grenzwert auf einen Komparatoreingang gegeben werden, an dessen anderem Eingang eine dem jeweiligen vorbestimmten Grenzwert entsprechende Vergleichsspannung angelegt ist.

Zur Wandlung des Messsignals in einen digitalen Messwert ist üblicherweise ein Analog-Digital-Wandler vorgesehen. Zur Verbesserung der Messgenauigkeit des Messumformers ist es vorteilhaft, die Versorgungsspannung des Sensors auf dessen Referenzspannungseingang zu führen. Dies erlaubt eine ratiometrische Messung von hoher Genauigkeit, die unabhängig von kleinen Schwankungen der Versorgungsspannung des Sensors ist.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:
- Figur 1: ein Schaltbild eines ersten Ausführungsbeispiels,
- Figur 2: ein Schaltbild eines zweiten Ausführungsbeispiels und
- Figur 3: ein Stromdiagramm.

In den Figuren sind einander entsprechende Teile mit gleichen Bezugszeichen versehen.

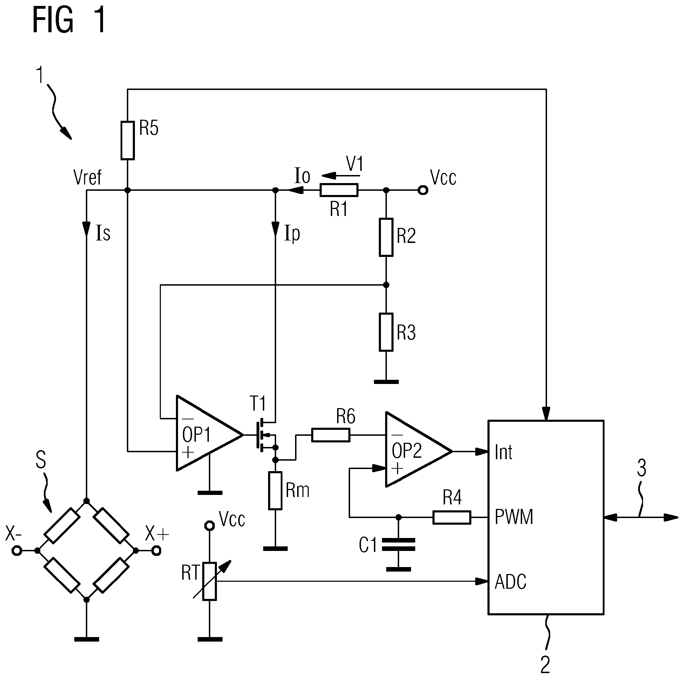

In Figur 1 sind lediglich die zum besseren Verständnis der Erfindung beitragenden Teile eines Messumformers 1 dargestellt, der zur Erfassung einer physikalischen oder chemischen Größe, beispielsweise eines Drucks, dient. Auf einem Substrat, welches als druckempfindliche Membran ausgebildet ist, sind vier dehnungsempfindliche Widerstände eines Sensors S zu einer Wheatstone-Brücke verschaltet. An diese Wheatstone-Brücke wird im Betrieb des Messumformers eine im Wesentlichen konstante Versorgungsspannung Vref angelegt. Durch den Sensor S, der im Wesentlichen aus der Wheatstone-Brücke besteht, fließt ein Strom Is, der zum einen vom jeweils herrschenden Druck, zum anderen aber auch von der Temperatur abhängig ist. Zwischen Anschlüssen X+ und X- ist eine Spannung abgreifbar, deren Pegel dem jeweiligen Druck entspricht und welche in dem gezeigten Ausführungsbeispiel das Messsignal, das durch den Sensor erzeugt wird, darstellt. Das Messsignal wird in bekannter Weise durch eine Ansteuer- und Auswerteeinrichtung 2 zu einem Messwert für die physikalische oder chemische Größe weiterverarbeitet, der bei Einsatz des Messumformers 1 in einer prozesstechnischen Anlage beispielsweise an ein Automatisierungsgerät oder eine Leitstation über einen Feldbus 3 ausgegeben wird.

Ein strombegrenzender Widerstand R1 ist zwischen eine Versorgungsspannung Vcc und die konstante Versorgungsspannung Vref des Sensors S geschaltet. Durch einen Querregler, der einen Spannungsteiler aus zwei Widerständen R2 und R3, einen Operationsverstärker OP1, einen Transistor T1 und einen gegen Masse geschalteten Messwiderstand Rm umfasst, ist zum Sensor S parallel geschaltet und regelt eine über dem Widerstand R1 abfallende Spannung V1 auf einen konstanten Wert. Bei im Wesentlichen konstanter Versorgungsspannung Vcc ist somit auch die Versorgungsspannung Vref des Sensors S weitgehend konstant und unabhängig von dessen Temperatur. Ebenso wird ein über den Widerstand R1 fließender Strom Io durch den Querregler konstant gehalten. Ein parallel zum Sensor S fließender und durch den Querregler eingestellter Strom Ip verhält sich daher gegenläufig zum Strom Is, der durch den Sensor S fließt. Ändert sich das ohmsche Verhalten des Sensors S aufgrund eines Fehlers, zum Beispiel einer Kontaminierung des Substrats, auftretender Leckströme, Risse im Substrat, Leitungsbruch oder Kurzschluss, ändert sich auch der durch den Querregler eingestellte Strom Ip entsprechend und in Folge davon die am Widerstand Rm abfallende Spannung. Mit dem Widerstand Rm wird also eine Spannung erhalten, die der Stromstärke des Stroms Ip entspricht, die sich wiederum gegenläufig zur Stromstärke des Stroms Is verhält. Das Auftreten eines Fehlers am Sensor S kann somit durch Überwachen der ermittelten Stromstärke des Stroms Ip auf Einhalten vorbestimmter Kriterien festgestellt werden. Im dargestellten Ausführungsbeispiel wird die Stromstärke des Stroms Ip mit Hilfe eines Operationsverstärkers OP2 auf Übersteigen einer vorbestimmten Schwelle überwacht, die mit Hilfe eines pulsweitenmodulierten Ausgangs PWM der Ansteuer- und Auswerteeinrichtung 2 und eines nachgeschalteten Tiefpasses, der als RC-Glied aus einem Widerstand R4 und einem Kondensator C1 besteht, erzeugt wird. Der Ausgang des Operationsverstärkers OP2 ist auf einen digitalen Eingang Int in der Ansteuer- und Auswerteeinrichtung 2 geführt. Tritt ein Reißen oder ein Bruch des Substrats oder von Verbindungsleitungen auf, führt dies zu einem Pegelwechsel am Digitaleingang Int. Der anliegende Signalzustand ist beispielsweise bei Verwendung einer geeigneten Software zur Programmierung eines in der Ansteuer-und Auswerteeinrichtung 2 eingesetzten Mikroprozessors durch ein sogenanntes Polling feststellbar. Ebenso kann ein Interrupteingang eines Mikroprozessors verwendet werden, wie es im vorliegenden Beispiel der Fall ist.

Ein temperaturabhängiger Widerstand RT dient zur Erfassung der Temperatur des Sensors S und ist mit einem Eingang ADC der Ansteuer- und Auswerteeinrichtung 2 verbunden, in welcher durch Analog-Digital-Wandlung ein digitaler Temperaturwert bestimmt wird. Anhand des jeweiligen Temperaturwerts wird zum einen eine Temperaturkompensation des Messwerts zur Verbesserung der Messgenauigkeit und zum anderen eine Anpassung des Grenzwerts, der zur Sensorüberwachung benötigt wird, entsprechend in der Ansteuer- und Auswerteeinrichtung 2 hinterlegten Temperaturkennlinien durchgeführt.

Der Widerstand R5, über welchen die Versorgungsspannung Vref des Sensors S auf die Ansteuer- und Auswerteeinrichtung 2 geführt ist, ermöglicht eine ratiometrische Auswertung des Messsignals des Sensors S und dient somit ebenfalls zur Verbesserung der Messgenauigkeit.

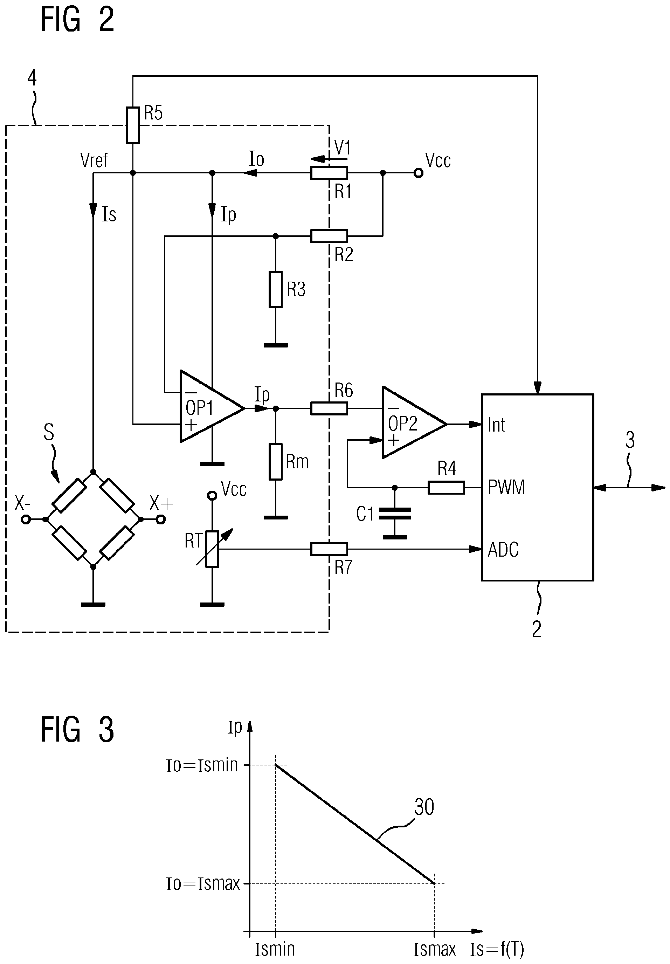

Figur 2 zeigt ein gegenüber Figur 1 leicht modifiziertes Ausführungsbeispiel, in welchem eine Sensoreinheit 4 für einen Einsatz in einer explosionsgefährdeten Zone 0 ausgeführt ist. Der Widerstand R1 ist hier das Element, welches die durch die Sensoreinheit 4 aufgenommene Leistung bestimmt. Die Widerstände R2, R5, R6 und R7, welche sich auf der Grenze des leistungsreduzierten Bereichs der Sensoreinheit 4 befinden, sind vergleichsweise hochohmig. Der Strom Ip wird durch einen Ausgangstransistor des Operationsverstärkers OP1 eingestellt, so dass auf einen zusätzlichen Transistor (T1 in Figur 1) verzichtet werden kann.

In dem Stromdiagramm gemäß Figur 3 ist die Abhängigkeit des parallel zum Sensor fließenden Stroms Ip von dem durch den Sensor fließenden Strom Is dargestellt, der selbst wiederum entsprechend einer Funktion f(T) von der Temperatur T des Sensors abhängig ist. Je nach Temperatur T liegt der Strom Is zwischen einem Minimalwert Ismin und einem Maximalwert Ismax. Durch den Querregler wird gegenläufig dazu der Strom Ip eingestellt, wie es in Figur 3 durch einen Verlauf 30 angedeutet ist. Beim Maximalwert Ismax des Stroms Is, der durch den Sensor fließt, das heißt bei maximaler Stromaufnahme des Sensors, wird ein Wert Io - Ismax für den Strom Ip eingestellt. Dieser ist gegenüber dem maximal durch den Sensor aufgenommenen Strom Ismax vergleichsweise klein. Durch den Querregler wird somit die Stromaufnahme der Sensoreinheit nur unwesentlich erhöht.

Die bei verschiedenen Temperaturen jeweils im Mittel zu erwartenden Werte des Stroms Ip können zum Beispiel als Kennlinie über der Temperatur dargestellt werden. Damit bei der Überwachung keine Fehlalarme aufgrund von Bauelementestreuungen ausgelöst werden, müssen zur Detektion eines Sensorfehlverhaltens Grenzwerte in Form einer Temperaturkennlinie in der Ansteuer- und Auswerteeinrichtung 2 (Figuren 1 und 2) hinterlegt werden, die leicht darüber liegen. Die Ermittlung der Grenzwerte kann daher in einfacher Weise durch Parallelverschiebung der Temperaturkennlinie um einen gewissen Betrag nach oben erfolgen, welcher die zulässigen Abweichungen von den Erwartungswerten geringfügig übersteigt.

## Patentansprüche

1. Messumformer zur Prozessinstrumentierung mit einem Sensor (S) zur Erfassung einer physikalischen oder chemischen Größe und zur Erzeugung eines Messsignals (X+, X-) und mit einer Ansteuer- und Auswerteeinrichtung (2) zur Bestimmung und Ausgabe eines Messwerts der physikalischen oder chemischen Größe in Abhängigkeit des Messsignals, wobei der Sensor (S) mit einem Widerstand (R1) zur Überwachung auf Bruch in Reihe geschaltet ist, **dadurch gekennzeichnet, dass** ein Querregler (R2, R3, OP1, T1, Rm) zum Sensor (S) parallel geschaltet ist zur Versorgung des Sensors mit konstanter Spannung (Vref) und dass Mittel (Rm, OP2, R4, C1, 2) vorgesehen sind zur Ermittlung der Stromstärke des durch den Querregler eingestellten, parallel zum Sensor fließenden Stroms (Ip) und zur Detektion eines Sensorfehlers anhand einer Überwachung der ermittelten Stromstärke auf Einhalten eines vorbestimmten Kriteriums.

2. Messumformer nach Anspruch 1, **dadurch gekennzeichnet, dass** Mittel (RT) zur Ermittlung der Sensortemperatur vorhanden sind und dass als vorbestimmtes Kriterium die Stromstärke auf Überschreiten eines Grenzwerts überwacht wird, der in Abhängigkeit der ermittelten Temperatur vorbestimmt ist.

3. Messumformer nach Anspruch 1 oder 2, **dadurch gekennzeichnet, dass** der Stellbereich des Querreglers derart vorbestimmt ist, dass bei intaktem Sensor und maximaler Stromaufnahme des Sensors nur ein vergleichsweise kleiner parallel zum Sensor fließender Strom (Ip) eingestellt wird.

4. Messumformer nach einem der vorhergehenden Ansprüche, **dadurch gekennzeichnet, dass** zur Ermittlung der Stromstärke des parallel zum Sensor (S) fließenden Stroms (Ip) ein Messwiderstand (Rm) in den Pfad des Stroms (Ip) geschaltet ist.

5. Messumformer nach einem der vorgehenden Ansprüche, **dadurch gekennzeichnet, dass** die Versorgungsspannung (Vref) des Sensors (S) auf den Referenzspannungseingang eines Analog-Digital-Wandlers geführt ist, der zur Wandlung des Messsignals vorgesehen ist.

6. Verfahren zur Überwachung des Zustands eines Sensors (S), der zur Erfassung einer physikalischen oder chemischen Größe und zur Erzeugung eines Messsignals (X+, X-) in einem Messumformer (1) zur Prozessinstrumentierung dient, wobei der Messumformer eine Ansteuer- und Auswerteeinrichtung (2) aufweist zur Bestimmung und Ausgabe eines Messwerts der physikalischen oder chemischen Größe in Abhängigkeit des Messsignals und wobei der Sensor (S) mit einem Widerstand (R1) zur Überwachung auf Bruch in Reihe geschaltet ist, **dadurch gekennzeichnet, dass** eine Versorgungsspannung (Vref) des Sensors (S) durch einen parallel geschalteten Querregler (R2, R3, OP1, T1, Rm) auf einen konstanten Wert geregelt wird, dass die Stromstärke des durch den Querregler eingestellten, parallel zum Sensor (S) fließenden Stroms (Ip) ermittelt wird und dass ein Sensorfehler anhand einer Überwachung der ermittelten Stromstärke auf Einhalten eines vorbestimmten Kriteriums detektiert wird.

## Claims

1. Measurement transducer for process instrumentation having a sensor (S) for detecting a physical or chemical quantity and for generating a measuring signal (X+, X-) and having an activation and evaluation facility (2) for determining and outputting a measured value of the physical or chemical quantity as a function of the measuring signal, wherein the sensor (S) is connected in series with a resistance (R1) in order to monitor for a breakage, **characterised in that** a cross regulator (R2, R3, OP1, T1, Rm) is connected in parallel with the sensor (S) in order to supply the sensor with a constant voltage (Vref) and the means (Rm, OP2, R4, C1, 2) are provided to determine the current intensity of the current (Ip) adjusted by the cross regulator and flowing in parallel to the sensor and to detect a sensor error with the aid of monitoring the determined current intensity for monitoring a specified criterion.

2. Measurement transducer according to claim 1, **characterised in that** means (RT) for determining the sensor temperature are present, and that as a specified criterion the current intensity is monitored for exceeding a limit value, which is predetermined as a function of the determined temperature.

3. Measurement transducer according to claim 1 or 2, **characterised in that** the control area of the cross regulator is predetermined such that with an intact sensor and a maximum current consumption of the sensor, only a comparatively small current (Ip) flowing in parallel to the sensor is adjusted.

4. Measurement transducer according to one of the preceding claims, **characterised in that** a measuring resistance (Rm) is connected in the path of the current (Ip) in order to determine the current intensity of the current (Ip) flowing in parallel to the sensor (S).

5. Measurement transducer according to one of the preceding claims, **characterised in that** the supply voltage (Vref) of the sensor (S) is guided to the reference voltage input of an analogue-digital converter, which is provided to convert the measuring signal.

6. Method for monitoring the state of a sensor (S), which is used to detect a physical or chemical quantity and to generate a measuring signal (X+, X-) in a measurement transducer (1) for process instrumentation, wherein the measurement transducer has an activation and evaluation facility (2) for determining and outputting a measured value of the physical or chemical quantity as a function of the measuring signal and wherein the sensor (S) is connected in series with a resistance (R1) in order to monitor for a breakage, **characterised in that** a supply voltage (Vref) of the sensor (S) is regulated to a constant value by a cross regulator (R2, R3,OP1, T1, Rm) which is connected in parallel, that the current intensity of the current (Ip) adjusted by the cross regulator and flowing in parallel to the sensor (S) is determined and that a sensor error is determined on the basis of a monitoring of the determined current intensity for maintaining a specified criterion.

## Revendications

1. Transducteur de mesure pour l'instrumentation de processus, comprenant un capteur (S) de détection d'une grandeur physique ou chimique et de production d'un signal (X+, X-) de mesure et comprenant un dispositif (2) de commande et d'exploitation, pour déterminer et émettre une valeur de mesure de la grandeur physique ou chimique, en fonction du signal de mesure, le capteur (S) étant monté en série avec une résistance (R1) de contrôle d'une rupture, **caractérisé en ce qu'**un régleur (R2, R3, OP1, T1, Rm) transversal est monté en parallèle au capteur (S), pour appliquer au capteur une tension (Vref) constante et **en ce qu'**il est prévu des moyens (Rm, OP2, R4, C1, 2) de détermination de l'intensité du courant (Ip) établi par le régleur transversal et passant parallèlement au capteur, et de détection d'un défaut du capteur, à l'aide d'un contrôle que l'intensité du courant déterminée respecte un critère défini à l'avance.

2. Transducteur de mesure suivant la revendication 1, **caractérisé en ce qu'**il est prévu des moyens (RT) de détermination de la température du capteur et **en ce qu'**il est contrôlé, comme critère défini à l'avance, que l'intensité du courant dépasse une valeur limite qui est définie à l'avance en fonction de la température déterminée.

3. Transducteur de mesure suivant la revendication 1 ou 2, **caractérisé en ce que** la plage de réglage du régleur transversal est définie à l'avance, de manière à établir, si le capteur est intact et si l'absorption du courant du capteur est maximum, seulement un courant (Ip) relativement peu intense passant en parallèle au capteur.

4. Transducteur de mesure suivant l'une des revendications précédentes, **caractérisé en ce que**, pour déterminer l'intensité du courant (Ip) passant en parallèle au capteur (S), une résistance (Rm) de mesure est montée dans le trajet du courant (Ip).

5. Transducteur de mesure suivant l'une des revendications précédentes, **caractérisé en ce que** la tension (Vref) d'alimentation du capteur (S) est appliquée à l'entrée d'une tension de référence d'un convertisseur analogique-numérique, qui est prévu pour la transformation du signal de mesure.

6. Procédé de contrôle de l'état d'un capteur (S), qui sert à détecter une grandeur physique ou chimique et à produire un signal (X+, X-) de mesure dans un transducteur (1) de mesure pour l'instrumentation de processus, le transducteur de mesure ayant un dispositif (2) de commande et d'exploitation pour la détermination et l'émission d'une valeur de mesure de la grandeur physique ou chimique, en fonction du signal de mesure, et le capteur (S) étant monté en série avec une résistance (R1) de contrôle d'une rupture, **caractérisé en ce que** l'on régule, à une valeur constante, une tension (Vref) d'alimentation du capteur (S) par un régleur (R2, R3, OP1, T1, Rm) transversal monté en parallèle, **en ce que** l'on détermine l'intensité du courant (Ip) établi par le régleur transversal et passant en parallèle au capteur (S) et **en ce que** l'on détecte un défaut du capteur à l'aide d'un contrôle que l'intensité du courant déterminé respecte un critère défini à l'avance.
